# EUROPEAN PATENT APPLICATION

(11) **EP 4 602 922 A1**
(43) Date of publication of application: **20.08.2025**
(21) Application number: 23877101.8
(22) Date of filing: 21.09.2023
(51) Int. Cl.: A22C 21/00

(54) **DARK MEAT SEPARATION DEVICE AND DARK MEAT SEPARATION METHOD**

(30) Priority: 13.10.2022 JP 2022164749
(71) Applicant: MAYEKAWA MFG. CO., LTD., Tokyo 135-8482 (JP)
(72) Inventor: KODAMA Ryuji, Tokyo 135-8482 (JP); USUI Hiroyuki, Tokyo 135-8482 (JP); HANE Shinji, Tokyo 135-8482 (JP); UMEDA Seiichiro, Tokyo 135-8482 (JP); GOTO Osamu, Tokyo 135-8482 (JP)
(74) Representative: Stöckeler, Ferdinand
(86) International application number: PCT/JP2023/034331
(87) International publication number: WO 2024/080095

(57) **Abstract**

A leg meat separation device (1) includes an ankle holding part (2) configured to hold an ankle (A) of a poultry leg meat (M), a meat pressing part (3) configured to press a meat section (Mp) near the ankle (A), a meat insertion part (5) that is inserted between the meat section (Mp) pressed by the meat pressing part (3) and a tibia and that is configured to separate the meat section (Mp) from the tibia, and a meat cutting part (6) configured to cut near the ankle (A) of the meat section (Mp).

## Description

### TECHNICAL FIELD

The present invention relates to a leg meat separation device and a leg meat separation method.

Priority is claimed on Japanese Patent Application No. 2022-164749, filed October 13, 2022, the content of which is incorporated herein by reference.

### BACKGROUND ART

In the related art, a device is known that automatically debones bone-in poultry leg meat (hereafter simply referred to as poultry leg meat) that has been cut from the large leg bone of a poultry body. After placing the poultry leg meat in the device, the process is carried out in stages at a plurality of work stations. The plurality of work stations include work of, in order, forming a slit in the poultry leg meat, cutting a meat section of the poultry leg meat around the ankle, separating the meat section up to the knee joint of the tibia, and cutting interarticular muscles and soft knee bones. In addition, the next station involves work of separating and deboning the meat section from the large leg bone, and then discharging the remaining bone.

Here, after forming the slit in the poultry leg meat and cutting the meat section around the ankle of the poultry leg meat, in order to separate the meat section until near the knee joint of the tibia, firstly a place cut in the meat section is held down with a meat separator from above. When the poultry leg meat is pulled up in this state, the meat section is separated up to near the knee joint so that the meat section is cut from the tibia by the meat separator.

### Citation List

### Patent Document

Patent Document 1: Japanese Patent No. 5331244

### SUMMARY OF INVENTION

### Technical Problem

However, in the related art described above, when separating the meat section near the knee joint of the tibia, the meat section is pressed and crushed by the meat separator. For this reason, there was a possibility that the quality (morphology) of the deboned poultry leg meat would deteriorate.

In addition, when cutting the meat section around the ankle of the poultry leg meat, it is conceivable that the cutter will cut too deeply into the tibia near the ankle. For this reason, there was a risk of the tibia rupturing when pulling up the poultry leg meat. As a result, there was a possibility that separation of the meat section from the tibia could not be performed properly, resulting in a poor yield of this separation work.

Further, a pull-up direction of the poultry leg meat is a direction perpendicular to a moving direction to each work station. For this reason, once movement to each work station has stopped, the poultry leg meat will be pulled up. As a result, there was a limit to how much a processing speed of the poultry leg meat could be improved.

An aspect of the present invention is directed to providing a leg meat separation device and a leg meat separation method that are capable of improving quality of a deboned poultry leg meat, improving a separation yield of a meat section from the tibia, and further improving a processing speed.

### Solution to Problem

A leg meat separation device according to the present invention is a leg meat separation device configured to separate a meat section from a tibia in a bone-in poultry leg meat which is cut from a large leg bone of a poultry body, the leg meat separation device including: an ankle holding part configured to hold an ankle of the poultry leg meat; a meat pressing part configured to press the meat section near the ankle; a meat insertion part that is inserted between the meat section pressed by the meat pressing part and the tibia and that is configured to separate the meat section from the tibia; and a meat cutting part configured to cut near the ankle of the meat section.

With this configuration, it is possible to prevent the meat section from being pressed and crushed when the meat section is separated from the tibia. For this reason, it is possible to improve quality of the deboned poultry leg meat.

In addition, when the meat section is separated from the tibia, there is no need to cut off the meat section around the ankle of the poultry leg meat in advance. For this reason, it is possible to prevent the tibia from being breaked around the ankle and improve a separation yield for separating the meat section from the tibia.

Further, when the meat section is separated from the tibia, since work of pulling up the poultry leg meat can be reduced, a processing speed of the poultry leg meat can be improved.

In this configuration, a slit forming may be performed in the poultry leg meat along a bone from the ankle until in front of a knee joint, the meat pressing part may press the meat section on a side of a patella and on a side opposite to the patella while having the tibia sandwiched therebetween from a side in which the slit forming of the poultry leg meat was performed, and the meat cutting part may cut the meat section from a side of an outer leg.

With this configuration, the meat section can be reliably separated from the tibia, and the morphology of the separated meat section can be maintained. In addition, the meat section can be separated from the tibia with a good yield.

In this configuration, the leg meat separation device may include a meat stopping part that is provided on a side opposite to the meat pressing part with respect to the poultry leg meat and that is configured to stop the poultry leg meat from the side opposite to the meat pressing part.

With this configuration, the meat section near the ankle can be reliably pressed by the meat pressing part. As a result, the meat section can be reliably extruded from the tibia by the meat pressing part, and the meat insertion part can be reliably inserted between the tibia and the meat section.

In this configuration, the meat pressing part may include: two pressing blocks that are provided to approach or separate from each other and that have pressing end surfaces configured to press the meat section; and a biasing part configured to elastically bias the two pressing blocks in a direction in which they approach each other, and the meat pressing part may press the meat section such that the tibia is interposed between the two pressing blocks.

With this configuration, the meat section can be pressed while keeping the two pressing blocks along the tibia as much as possible. For this reason, the meat section near the ankle can be extruded from the tibia as much as possible. As a result, when the meat insertion part is inserted into the meat section, the amount of meat section remaining on the tibia can be reduced as much as possible. Accordingly, the separation yield of the meat section from the tibia can be further improved.

In this configuration, pressing protrusion portions may be provided on each of the pressing end surfaces on sides of the two pressing blocks facing each other, and pressing chamfered portions in which an interval between the two pressing protrusion portions is gradually increased toward tips may be formed on each of the pressing protrusion portions on sides of the two pressing blocks facing each other.

With this configuration, a surface pressure when the meat section is pressed by the two pressing blocks can be increased. As a result, each of the pressing protrusion portions bites into the meat section, allowing the meat section to be smoothly extruded from the tibia.

In addition, when the pressing protrusion portion hits the tibia, the pressing chamfered portion moves smoothly along the tibia, and the two pressing protrusion portions are smoothly spread apart. For this reason, the meat section can be pressed while more reliably aligning the two pressing blocks along the tibia.

In this configuration, the meat pressing part may include a restricting part configured to restrict a pressing amount on the meat section by the pressing block.

With this configuration, it is possible to prevent the pressing amount of the meat section by the meat pressing part from being too little or too much. For this reason, the pressing amount of the meat section by the meat pressing part can be maintained appropriately, and the meat insertion part can be inserted between the tibia and the meat section with high precision.

A leg meat separation method according to the present invention is a leg meat separation method of separating a meat section from a tibia in a bone-in poultry leg meat which is cut from a large leg bone of a poultry body, the leg meat separation method including: a meat pressing process of pressing the meat section near an ankle of the poultry leg meat in a state in which the ankle is held; a meat separating process of separating the meat section from the tibia by inserting a sharp tipped plate-shaped meat insertion part between the meat section pressed by the meat pressing process and the tibia; and a meat cutting process configured to cut near the ankle of the meat section.

With this method, it is possible to prevent the meat section from being pressed and crushed when the meat section is separated from the tibia. For this reason, it is possible to improve quality of the deboned poultry leg meat.

In addition, when the meat section is separated from the tibia, there is no need to cut off the meat section around the ankle of the poultry leg meat in advance. For this reason, it is possible to prevent the tibia from breaking around the ankle and improve the separation yield of the meat section from the tibia.

Further, when the meat section is separated from the tibia, work of pulling up the poultry leg meat can be reduced, and a processing speed of the poultry leg meat can be improved.

In this method, in the meat cutting process, near the ankle of the meat section may be cut in a state in which the meat section is separated from the tibia by the meat separating process.

With this method, near the ankle of the meat section can be easily cut.

In this method, a slit forming may be performed in the poultry leg meat along a bone from the ankle until in front of a knee joint, in the meat pressing process, a side of the patella and a side opposite to the patella while having the tibia in the meat section sandwiched therebetween may be pressed from a side in which the slit forming of the poultry leg meat was performed; and in the meat cutting process, the meat section may be cut from a side of an outer leg.

With this method, the meat section can be reliably separated from the tibia, and the morphology of the separated meat section can be well maintained. In addition, the meat section can be separated from the tibia with a good yield.

In this method, in the meat separating process, the meat insertion part may be inserted from a side of the patella of the poultry leg meat.

With this method, the meat insertion part can be appropriately inserted into the meat section.

In this method, the leg meat separation method may include, when the meat pressing process is performed, a meat pressing process of stopping the poultry leg meat toward a side opposite to a pressing direction by the meat pressing process.

With this method, the meat section near the ankle can be reliably pressed by the meat pressing part. As a result, the meat section can be reliably extruded from the tibia by the meat pressing part, and the meat insertion part can be reliably inserted between the tibia and the meat section.

### Advantageous Effects of Invention

According to the aspect of the present invention, it is possible to improve quality of a deboned poultry leg meat, improve a separation yield of a meat section from the tibia, and further improve a processing speed.

### BRIEF DESCRIPTION OF DRAWINGS

[FIG. 1] A schematic configuration view of a leg meat separation device according to an embodiment of the present invention.
[FIG. 2] A side view of a poultry leg meat held by an ankle holding part according to the embodiment of the present invention.
[FIG. 3] A schematic configuration view of a meat pressing part and a meat stopping part according to the embodiment of the present invention when seen from above.
[FIG. 4] A view for describing operations of the meat pressing part and the meat stopping part according to the embodiment of the present invention, showing a state in which each pressing block is extruded toward a poultry leg meat.
[FIG. 5] A view for describing an operation of a meat insertion part according to the embodiment of the present invention, showing a state in which an initial insertion part is inserted into a meat section.
[FIG. 6] A view for describing an operation of the meat insertion part according to the embodiment of the present invention, showing a state in which a separation part is inserted into the meat section.
[FIG. 7] is a view showing an operation of a meat cutting part according to the embodiment of the present invention.

### DESCRIPTION OF EMBODIMENTS

Hereinafter, an embodiment of the present invention will be described with reference to the accompanying drawings.

### <Leg meat separation device>

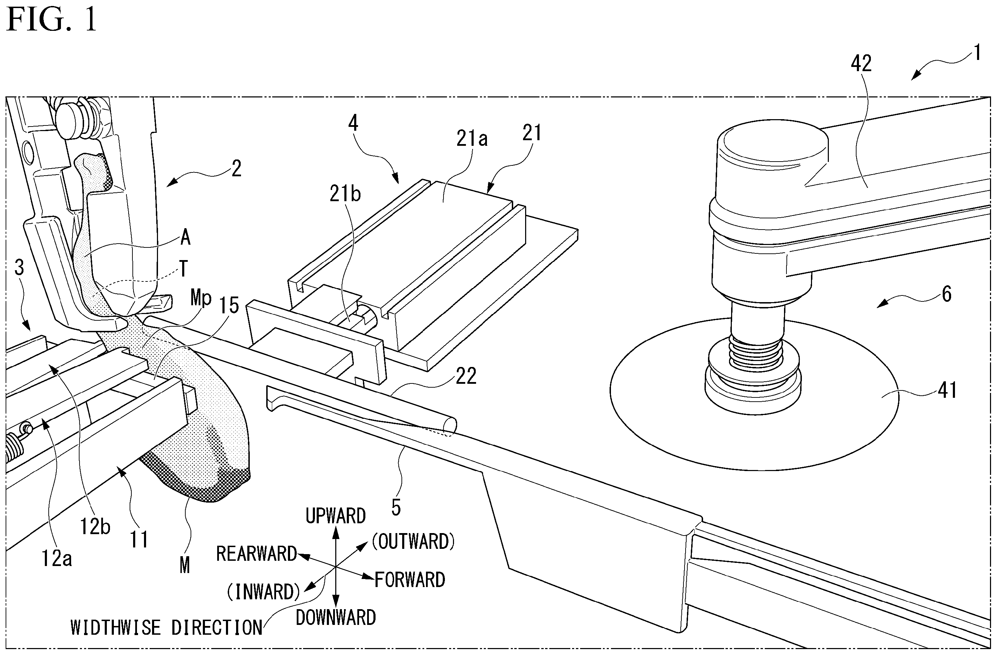

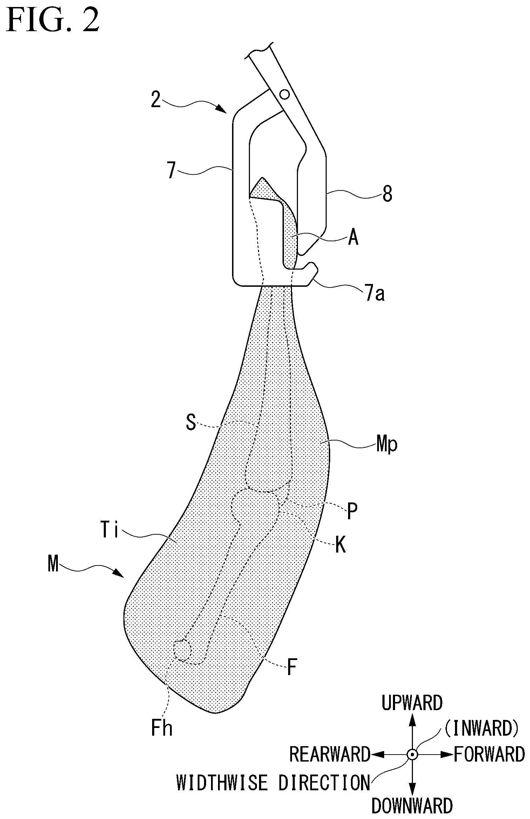

FIG. 1 is a schematic configuration view of a leg meat separation device 1. FIG. 2 is a side view of a poultry leg meat M held by an ankle holding part 2.

The leg meat separation device 1 is a device configured to separate a meat section Mp from the tibia S until before a knee joint K from an ankle A of the poultry leg meat M. Hereinafter, an upward/downward direction and a horizontal direction in a state in which the leg meat separation device 1 is placed on a floor (not shown) are simply referred to an upward/downward direction and a horizontal direction, respectively.

As shown in FIG. 1 and FIG. 2, the leg meat separation device 1 includes the ankle holding part 2 configured to hold the ankle A of the poultry leg meat M, a meat pressing part 3 provided directly below the ankle holding part 2, a meat stopping part 4 provided on side opposite to the meat pressing part 3 with respect to the poultry leg meat M held by the ankle holding part 2, a plate-shaped meat insertion part 5 provided between the meat pressing part 3 and the meat stopping part 4 at a position facing the poultry leg meat M held by the ankle holding part 2 in a horizontal direction, and a meat cutting part 6 provided in the vicinity of the meat insertion part 5.

### <Ankle holding part>

The ankle holding part 2 includes a hanger 7 that is long in the upward/downward direction, and a hook 8 that is provided to be openable and closable with respect to the hanger 7. Forked claw portions 7a extending to be bent in a horizontal direction are formed on a lower end of the hanger 7. The ankle A of the poultry leg meat M is hooked between these claw portions 7a, and the poultry leg meat M is hanging from the hanger 7. In this state, the poultry leg meat M has a patella P facing away from the hanger 7 (the protrusion direction of the claw portions 7a).

In the following description, the ankle A of the poultry leg meat M is assumed to be held in the ankle holding part 2, and descriptions may be given having the poultry leg meat M as reference. In addition, in this posture in which the poultry leg meat M is hanging from the hanger 7, there is a case in which the side of the patella P is referred to as the front side, and the opposite side of the patella P is referred to as the rear. Further, in this posture in which the poultry leg meat M is hanging from the hanger 7, there is a case in which a direction of an inner leg Ti and an outer leg To of the poultry leg meat M, i.e., a direction which is along the horizontal direction and which is perpendicular to the forward/rearward direction is referred to as a widthwise direction. There is a case in which the direction of the inner leg Ti of the poultry leg meat M is referred to as an inward direction, and the direction of the outer leg To of the poultry leg meat M is referred to as an outward direction.

The hook 8 presses the ankle A of the poultry leg meat M hanging in the claw portions 7a in a closed state from the front (the patella P side). Accordingly, the ankle A of the poultry leg meat M is sandwiched and held between the hanger 7 and the hook 8.

The closed state of the hook 8 is maintained by, for example, a spring (not shown). The spring elastically biases the hook 8 in a closing direction. With the hook 8 open against the elastic force of the spring, the ankle A is hooked onto the claw portions 7a of the hanger 7, and then the hook 8 is closed.

### <Meat pressing part>

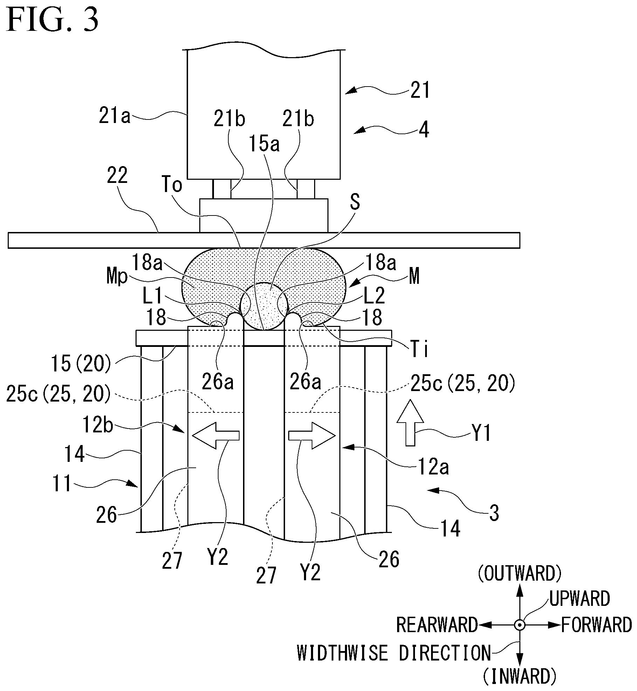

FIG. 3 is a schematic configuration view of the meat pressing part 3 and the meat stopping part 4 when seen from above.

As shown in FIG. 1 to FIG. 3, the meat pressing part 3 is disposed just below the ankle holding part 2 and inward from the side of the inner leg Ti of the poultry leg meat M. The meat pressing part 3 presses the meat section Mp in the vicinity of the ankle A from the side of the inner leg Ti.

The meat pressing part 3 includes a frame body 11, two pressing blocks 12a and 12b (a front pressing block 12a, a rear pressing block 12b) provided in the frame body 11, and a coil spring (an example of a biasing part in claims) 13 configured to bias an elastic force to each of the pressing blocks 12a and 12b.

The frame body 11 is formed into a frame shape that is long in the widthwise direction when seen in the upward/downward direction. That is, the frame body 11 includes two sidewalls 14 disposed in the forward/rearward direction and elongated in the widthwise direction, and a restricting bar 15 that bridges between ends of the two sidewalls 14 on the side of the poultry leg meat M (ends on the side of the ankle holding part 2). The frame body 11 is provided to be slidable in the widthwise direction. In other words, the frame body 11 is provided to be movable toward and away from the poultry leg meat M. The frame body 11 is slidable by, for example, an air cylinder (not shown). An end surface of the restricting bar 15 on the side of the poultry leg meat M abuts the inner leg Ti of the poultry leg meat M and functions as a reference surface 15a configured to perform positioning of the poultry leg meat M with respect to the meat pressing part 3 (details will be described below).

The two pressing blocks 12a and 12b are arranged next to each other in the forward/rearward direction with a small interval between them. The two pressing blocks 12a and 12b are formed surface-symmetrical while having a planar surface, which is along the upward/downward direction and the widthwise direction, as the center. For this reason, among the two pressing blocks 12a and 12b, only the front pressing block 12a, which is located at the front, will be described here. Among the two pressing blocks 12a and 12b, the rear pressing block 12b, which is located at the rear, will basically be given the same reference sign as the front pressing block 12a and will be omitted from the description, but will be described only as necessary.

The front pressing block 12a includes a rectangular parallelepiped base block 25 disposed in the frame body 11 and elongated in the widthwise direction, an upper pressing plate 26 disposed on an upper surface of the base block 25, and a lower pressing plate 27 disposed on a lower surface of the base block 25.

A thickness of the base block 25 in the upward/downward direction is slightly greater than that of the restricting bar 15 in the upward/downward direction. An end surface 25c of the base block 25 on the side of the poultry leg meat M is parallel to the restricting bar 15.

The base block 25 is provided to be slidable relative to the frame body 11 in the widthwise direction. In other words, the base block 25 is provided to be able to approach and move away from the poultry leg meat M relative to the frame body 11. The base block 25 is slidable by, for example, an air cylinder (no shown). Such base block 25 functions as a restricting part 20 that restricts the pressing amount of each of the pressing blocks 12a and 12b against the poultry leg meat M in cooperation with the restricting bar 15 (details will be described below).

The upper pressing plate 26 and the lower pressing plate 27 are formed surface-symmetrical while having a planar surface, which is along the forward/rearward direction and the widthwise direction, as the center. For this reason, only the upper pressing plate 26 will be described. As for the lower pressing plate 27, basically, the same reference signs as those for the upper pressing plate 26 are used and the description will be omitted, but it will be described only as necessary.

The upper pressing plate 26 is a plate-shaped member that is long in the widthwise direction and whose plate thickness direction coincides with the upward/downward direction. A width of the upper pressing plate 26 in the forward/rearward direction is substantially the same as that of the base block 25 in the forward/rearward direction. The upper pressing plate 26 protrudes from the base block 25 toward the poultry leg meat M. More specifically, the upper pressing plate 26 protrudes slightly from the restricting bar 15 in a state in which the base block 25 is spaced farthest away from the poultry leg meat M with respect to the frame body 11. Since the thickness of the base block 25 in the upward/downward direction is slightly greater than that of the restricting bar 15 in the upward/downward direction, it becomes a state in which the restricting bar 15 is interposed between the upper pressing plate 26 and the lower pressing plate 27.

An end surface of the upper pressing plate 26 on the side of the poultry leg meat M is a pressing end surface 26a that presses the poultry leg meat M. On the side of the facing surface of each of the pressing blocks 12a and 12b, a pressing protrusion portion 18 is formed on the pressing end surface 26a to protrude toward the poultry leg meat M. A chamfered portion (an example of a pressing chamfered portion in claims) 18a is formed on the pressing protrusion portion 18 on the side of the facing surface of each of the pressing blocks 12a and 12b. The chamfered portion 18a is formed in an arc shape so that the interval between the two pressing protrusion portions 18 gradually increases as it goes toward the tip (the poultry leg meat M).

These kind of two pressing blocks 12a and 12b are provided in the frame body 11 to be slidable in the forward/rearward direction. In other words, the two pressing blocks 12a and 12b are provided within the frame body 11 to be movable towards and away from each other. The closest interval between the two pressing blocks 12a and 12b is the interval at which the tibia S of the poultry leg meat M cannot pass between the two pressing blocks 12a and 12b.

The coil spring 13 elastically biases the pressing blocks 12a and 12b in a direction in which they approach each other.

### <Meat stopping part>

As shown in FIG. 1, the meat stopping part 4 is disposed outward than the outer leg To side of the poultry leg meat M and slightly lower than the meat pressing part 3. The meat stopping part 4 stops the outer leg To of the poultry leg meat M.

The meat stopping part 4 includes an actuator 21, and a stopping bar 22 provided on the actuator 21.

As the actuator 21, for example, the air cylinder is used. That is, the actuator 21 includes a cylinder tube 21a and a piston rod 21b provided to be slidable relative to the cylinder tube 21a. The actuator 21 is disposed such that the slide direction of the piston rod 21b is the widthwise direction, and the tip of the piston rod 21b faces the poultry leg meat M.

The stopping bar 22 is provided on the tip of the piston rod 21b. The stopping bar 22 extends in the forward/rearward direction. By driving the actuator 21, the stopping bar 22 moves closer to or away from the poultry leg meat M. In a state in which the stopping bar 22 approaches the poultry leg meat M, the stopping bar 22 stops slightly above the knee joint K from the side of the outer leg To.

### <Meat cutting part>

The meat cutting part 6 is located near the meat insertion part 5 and outward than the outer leg To of the poultry leg meat M. The meat cutting part 6 cuts the meat section Mp near the ankle A from the outside in a state in which the meat insertion part 5 is inserted into the poultry leg meat M.

The meat cutting part 6 includes a round blade cutter 41, and a driving part 42 configured to rotate the round blade cutter 41.

A rotation axis C of the round blade cutter 41 coincides with the upward/downward direction. The round blade cutter 41 is disposed near the ankle A of the poultry leg meat M at substantially the same height as that of the upper pressing plate 26 of the meat stopping part 4.

The driving part 42 is, for example, an electric motor. However, the present invention is not limited to this, and it is sufficient if the round blade cutter 41 can be rotated. For example, it is also possible to use an air motor instead of the electric motor.

The meat cutting part 6 is arranged so as to be able to approach and move away from the poultry leg meat M in the horizontal direction. When approaching the poultry leg meat M, the meat section Mp near the ankle A is cut by the round blade cutter 41, and finally the meat section Mp is separated from the tibia S. Hereinafter, an operation of the leg meat separation device 1 will be described in detail.

### <Operation of leg meat separation device>

Next, an operation of the leg meat separation device 1 will be described.

As shown in FIG. 2, the poultry leg meat M set in the leg meat separation device 1 is held by the ankle holding part 2 at the ankle A and is being hanged. In the poultry leg meat M, a slit forming has already been performed along the tibia S between the ankle A of the poultry leg meat M until in front of the knee joint K. In this state, the inner leg Ti of the poultry leg meat M and the meat pressing part 3 face each other in the widthwise direction.

More specifically, a center between the pressing blocks 12a and 12b of the meat pressing part 3and the tibia S near the ankle A of the poultry leg meat M face each other in a slide direction of each of the pressing blocks 12a and 12b in the widthwise direction. From this state, the meat pressing part 3 is pressed against the inner leg Ti of the poultry leg meat M (meat pressing process).

In addition, in a state in which the poultry leg meat M is hanging from the ankle holding part 2, the outer leg To of the poultry leg meat M and the meat stopping part 4 face each other in the widthwise direction. From this state, the outer leg To of the poultry leg meat M is stopped by the stopping bar 22 of the meat stopping part 4 (meat stopping process). Hereinafter, the meat pressing process and the meat stopping process will be described in detail.

First, the meat stopping process will be described in detail.

As shown in FIG. 3, the stopping bar 22 is extruded toward the poultry leg meat M by the actuator 21. If the actuator 21 is, for example, an air cylinder, the air pressure will cause the stopping bar 22 to elastically stop the outer leg To of the poultry leg meat M. For this reason, depending on the size of the poultry leg meat M, the stopping bar 22 may be pushed back by the resistance of the poultry leg meat M. In this way, the meat stopping part 4 stops the outer leg To of the poultry leg meat M appropriately according to the size of the poultry leg meat M. The actuator 21 prevents the poultry leg meat M from being stopped more than necessary.

Next, the meat pressing process will be described in detail.

When pressing the meat pressing part 3 toward the inner leg Ti of the poultry leg meat M, first, the meat pressing part 3 is integrated with the frame body 11, and the pressing blocks 12a and 12b are extruded toward the poultry leg meat M (see arrow Y1 in FIG. 3). Then, the reference surface 15a of the restricting bar 15 hits the inner leg Ti of the poultry leg meat M. Accordingly, the positioning of the poultry leg meat M with respect to the meat pressing part 3 is performed.

Here, each of the pressing blocks 12a and 12b (the base block 25) is in a state which are located at the furthest position from the poultry leg meat M with respect to the frame body 11. In this state, the pressing end surface 26a of the each of the pressing plates 26 and 27 is slightly protruded from the reference surface 15a (the restricting bar 15). For this reason, the pressing end surface 26a of each of the pressing plates 26 and 27 slightly presses the inner leg Ti of the poultry leg meat M.

In addition, the tibia S slightly enters between each of the pressing protrusion portions 18 of the upper pressing plate 26 and the lower pressing plate 27 in the front pressing block 12a and each of the pressing protrusion portions 18 of the upper pressing plate 26 and the lower pressing plate 27 in the rear pressing block 12b.

Here, the pressing protrusion portion 18 is formed only on a part of the pressing end surface 26a (on the side of the facing surface of each of the pressing blocks 12a and 12b of the pressing end surface 26a). For this reason, the surface pressure of the pressing protrusion portion 18 against the inner leg Ti increases, making it easier for the pressing protrusion portion 18 to penetrate into the inner leg Ti. As a result, the tibia S easily enters between the pressing protrusion portion 18 of the front pressing block 12a and the pressing protrusion portion 18 of the rear pressing block 12b.

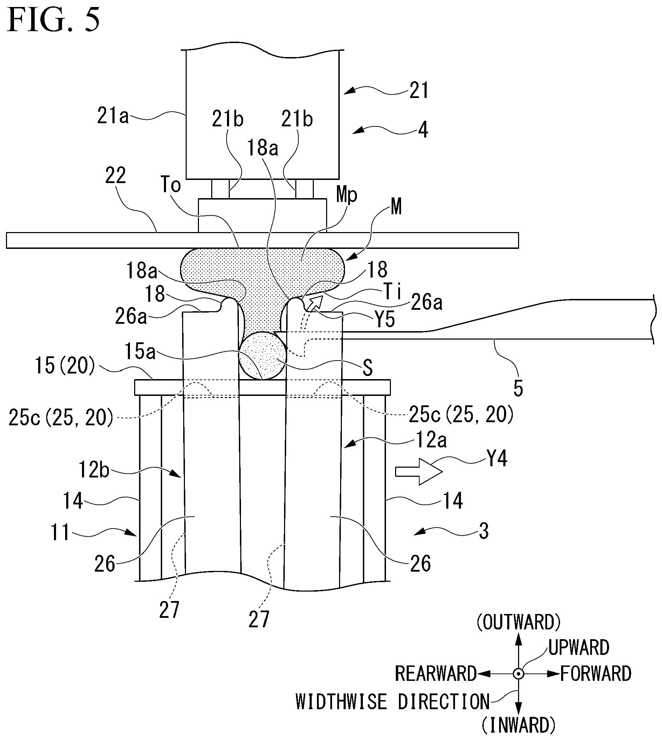

In addition, the two pressing blocks 12a and 12b are brought into the most closest state by the coil spring 13. An interval between the two pressing blocks 12a and 12b at this time is an interval so that the tibia S of the poultry leg meat M cannot pass between the pressing blocks 12a and 12b. For this reason, when the tibia S tries to enter between the two pressing blocks 12a and 12, the tibia S pushes the pressing protrusion portions 18 of the two pressing blocks 12a and 12b against the spring force of the coil spring 13 (see arrow Y2 in FIG. 5). Here, since the chamfered portion 18a is formed on each of the pressing protrusion portions 18, each of the pressing protrusion portions 18 is smoothly pressed open along the tibia S.

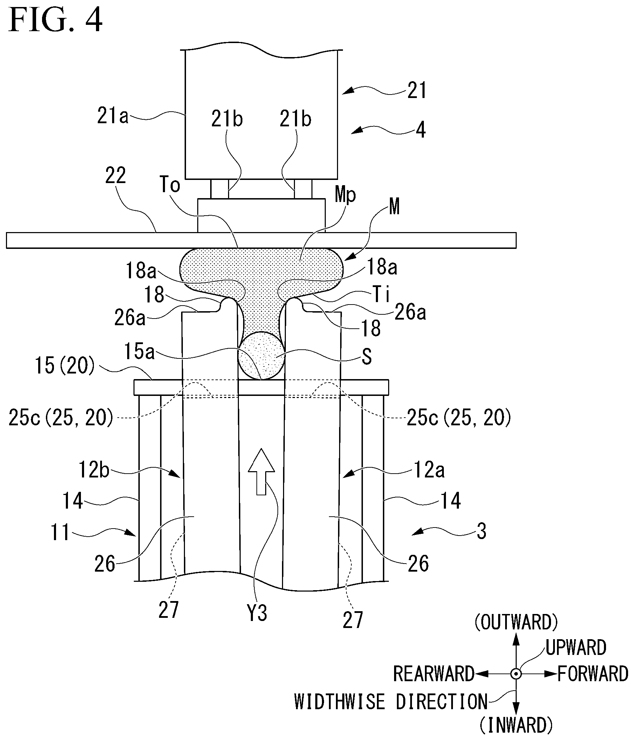

FIG. 4 is a view for describing operations of the meat pressing part 3 and the meat stopping part 4.

Next, as shown in FIG. 4, each of the pressing blocks 12a and 12b slides toward the poultry leg meat M with respect to the frame body 11 (see arrow Y3 in FIG. 4). Then, while leaving the tibia S in place, the meat section Mp on the front and rear of the tibia S is extruded by the pressing blocks 12a and 12b to be further rolled outward.

The two pressing blocks 12a and 12b slide until the end surface 25c of the base block 25 abuts against the restricting bar 15 of the frame body 11. The two pressing blocks 12a and 12b press the meat section Mp in front of and behind the tibia S by the distance they slide, and extrude the meat section Mp outward. Since the poultry leg meat M abuts the reference surface 15a of the restricting bar 15, the pressing amount of each of the pressing blocks 12a and 12b against the poultry leg meat M is always constant. That is, the restricting bar 15 and the base block 25 function as the restricting part 20 configured to restrict a pressing amount of each of the pressing blocks 12a and 12b against the poultry leg meat M.

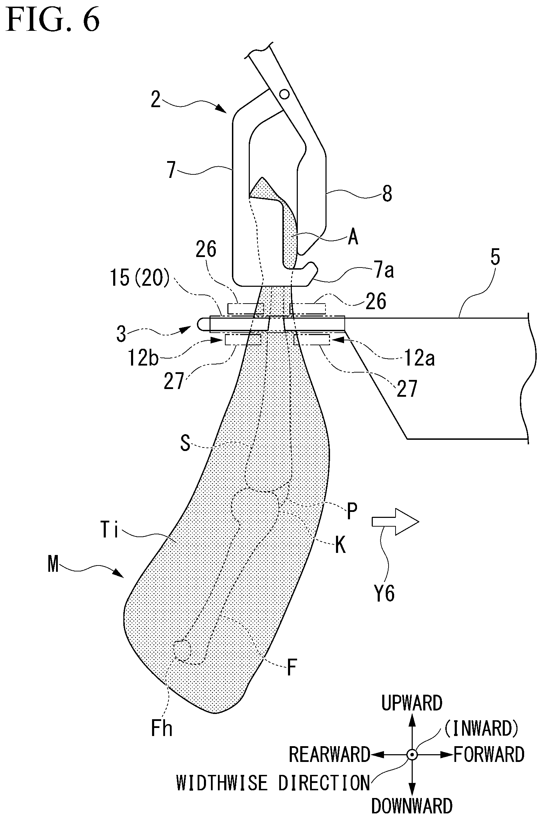

FIG. 5 and FIG. 6 are views for describing an operation of the meat insertion part 5.

Next, the meat insertion part 5 is inserted between the meat section Mp pressed by the meat pressing part 3 and the tibia S (meat separating process).

Specifically, as shown in FIG. 5, while keeping the meat section Mp pressed by the meat pressing part 3, the ankle holding part 2 and the meat pressing part 3 are moved forward toward the meat insertion part 5 (see arrow Y4 in FIG. 5). That is, with the patella P of the poultry leg meat M facing the meat insertion part 5, the poultry leg meat M is moved toward the meat insertion part 5 (forward).

Then, the meat insertion part 5 is inserted into the meat section Mp from the side of the patella P. Then, the meat insertion part 5 passes through a space between the upper pressing plate 26 and the lower pressing plate 27 of each of the pressing blocks 12a and 12b. After that, the meat insertion part 5 is reliably inserted into the meat section Mp pressed by the meat pressing part 3 near the ankle A.

A position of a tip of the meat insertion part 5 is slightly outward from a center of the tibia S when seen in the upward/downward direction. For this reason, when the poultry leg meat M is moved forward, the meat insertion part 5 hits the tibia S. Then, the meat insertion part 5 is displaced so as to ride up onto the tibia S (moving away from the tibia S) (see arrow Y5 in FIG. 5). The meat insertion part 5 returns to its original position when the tip passes through the tibia S. **In** this way, the tip of the meat insertion part 5 is inserted to be reliably aligned with the tibia S while keeping its thickness in the widthwise direction as small as possible.

After that, as shown in FIG. 6, when the poultry leg meat M is moved further forward (see arrow Y6 in FIG. 6), the meat section Mp near the ankle A is extruded outward by the meat insertion part 5. Then, the meat section Mp is further separated from the tibia S. Here, the meat section Mp is gradually and smoothly separated from the tibia S by the meat insertion part 5. For this reason, it is possible to prevent the meat section Mp from being damaged.

After that, when the poultry leg meat M is moved further forward, the meat insertion part 5 is inserted along the tibia S. Then, the meat insertion part 5 separates the meat section Mp from the vicinity of the ankle A of the tibia S until in front of the knee joint K. Here, the meat section Mp is gradually and smoothly separated from the tibia S by the meat insertion part 5. For this reason, it is possible to prevent the meat section Mp from being damaged.

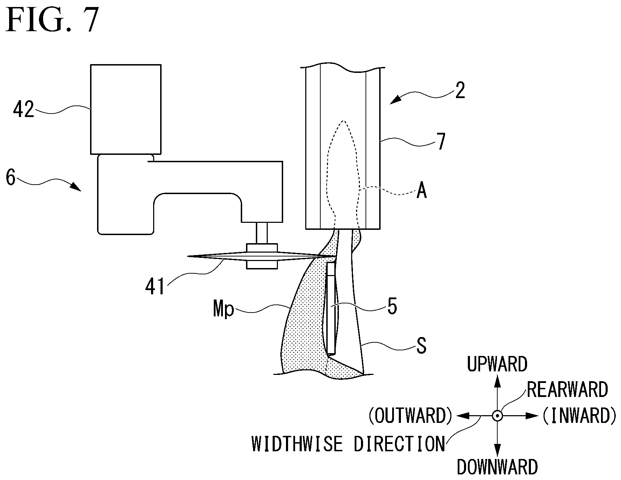

FIG. 7 is a view for describing an operation of the meat cutting part 6.

Next, the vicinity of the ankle A of the meat section Mp is cut by the meat cutting part 6 (meat cutting process).

Specifically, as shown in FIG. 7, while the round blade cutter 41 of the meat cutting part 6 is moved horizontally, the round blade cutter 41 is brought close to the vicinity of the ankle A of the meat section Mp. Then, the meat section Mp is cut by the round blade cutter 41 from outside.

Here, the round blade cutter 41 is disposed at substantially the same height as that of the upper pressing plate 26 of the meat stopping part 4. Moreover, the vicinity of the ankle A of the meat section Mp is separated to be extruded outward from the tibia S by the meat insertion part 5. For this reason, the meat section Mp where the round blade cutter 41 passes is under appropriate tension. Accordingly, the meat section Mp is reliably cut by the round blade cutter 41.

In the meat separating process, which precedes the meat cutting process, the meat section Mp is separated from the vicinity of the ankle A of the tibia S until in front of the knee joint K (see FIG. 2). For this reason, by cutting the meat section Mp near the ankle A through the meat cutting process, the meat section Mp is completely separated from the tibia S. Accordingly, the operation of the leg meat separation device 1 is completed.

In this way, the above mentioned leg meat separation device 1 includes the ankle holding part 2 configured to hold the ankle A of the poultry leg meat M, the meat pressing part 3 configured to press the meat section Mp near the ankle A, the meat insertion part 5 that is inserted between the meat section Mp and the tibia S and that is configured to separate the meat section Mp from the tibia S, and the meat cutting part 6 configured to cut near the ankle A of the meat section Mp. For this reason, when the meat section Mp is separated from the tibia S, it is possible to prevent the meat section Mp from being pressed and crushed as in the related art. Accordingly, it is possible to improve quality of the deboned poultry leg meat M.

In addition, when the meat section Mp is separated from the tibia S, as in the related art, there is no need to cut off the meat section Mp around the ankle A of the poultry leg meat M in advance. For this reason, it is possible to prevent the tibia S from fracturing around the ankle A, and improve the separation yield of the meat section Mp from the tibia S.

Further, when the meat section Mp is separated from the tibia S, as in the related art, works of pulling up the poultry leg meat M can be reduced. For this reason, a processing speed of the poultry leg meat M can be improved.

To separate the meat section Mp from the tibia S, a slit forming was performed in the inner leg Ti of the poultry leg meat M. Then, the meat pressing part 3 presses the meat section from the inner leg Ti to the outer leg To of the poultry leg meat M. Here, the meat section Mp on both front and rear sides of the tibia S is pressed. In addition, the meat section Mp is cut by the meat cutting part 6 from outside. For this reason, the meat section Mp can be reliably separated from the tibia S. As a result, the morphology of the separated meat section Mp can be maintained in a good manner. **In** addition, the meat section Mp can be separated from the tibia S with a good yield.

The leg meat separation device 1 includes the meat stopping part 4 configured to stop the poultry leg meat M from a side opposite to the meat pressing part 3 (outside). For this reason, the meat section Mp near the ankle A can be reliably pressed by the meat pressing part 3. As a result, the meat pressing part 3 reliably extrudes the meat section Mp from the tibia S, and the meat insertion part 5 can be reliably inserted between the tibia S and the meat section Mp.

The meat pressing part 3 includes the two pressing blocks 12a and 12b, and the coil spring 13 configured to elastically bias the two pressing blocks 12a and 12b in a direction they approach each other. For this reason, the meat section Mp can be pressed while aligning the two pressing blocks 12a and 12b along the tibia S as much as possible. As a result, the meat section Mp near the ankle A can be extruded from the tibia S as much as possible. Accordingly, when the meat insertion part 5 is inserted into the meat section Mp, the amount of the meat section Mp remaining on the side of the tibia S can be reduced as much as possible. Accordingly, a separation yield of the meat section Mp from the tibia S can be further improved.

The pressing protrusion portion 18 is formed in the pressing end surface 26a of each of the pressing plates 26 and 27 of each of the pressing blocks 12a and 12b. **In** addition, the chamfered portion 18a is formed on the pressing protrusion portion 18. For this reason, a surface pressure when the meat section Mp is pressed by the two pressing blocks 12a and 12b can be increased. As a result, each of the pressing protrusion portions 18 bites into the meat section Mp, and these pressing protrusion portions 18 allow the meat section Mp to be smoothly extruded from the tibia S.

In addition, when the pressing protrusion portion 18 hits the tibia S, the chamfered portion 18a moves smoothly along the tibia S, and the two pressing protrusion portions 18 are smoothly spread apart. For this reason, the meat section Mp can be pressed while the two pressing blocks 12a and 12b are more reliably aligned with the tibia S.

The meat pressing part 3 includes the restricting bar 15 and the base block 25 as the restricting part 20 configured to restrict a pressing amount on the meat section Mp by the pressing blocks 12a and 12b. For this reason, it is possible to prevent the pressing amount of the meat section Mp by the meat pressing part 3 from being too little or too much. As a result, it is possible to appropriately maintain the pressing amount of the meat section Mp by the meat pressing part 3. Accordingly, the meat insertion part 5 can be accurately inserted between the tibia S and the meat section Mp.

The method for separating the meat section Mp from the tibia S of the poultry leg meat M includes the meat pressing process, the meat separating process, and the meat cutting process. By using this method, when separating the meat section Mp from the tibia S, it is possible to prevent the meat section Mp from being pressed and crushed as in the related art. For this reason, the quality of the deboned poultry leg meat M can be improved. In addition, it is possible to prevent the tibia S from fracturing around the ankle A and improve the separation yield of the meat section Mp from the tibia S. Further, a processing speed of the poultry leg meat M can be improved.

In the meat cutting process, in a state in which the meat section Mp is separated from the tibia S by the meat separating process, near the ankle A of the meat section Mp is cut. For this reason, when the meat section Mp is cut by the round blade cutter 41 of the meat cutting part 6, the meat section Mp can be prevented from being pushed away by the round blade cutter 41. Accordingly, the vicinity of the ankle A of the meat section Mp can be easily cut by the meat cutting part 6.

When the meat insertion part 5 is inserted into the poultry leg meat M, the meat insertion part 5 is inserted from the side of the patella P. For this reason, compared to the case of inserting the meat insertion part 5 from the side opposite to the patella P, the meat insertion part 5 can be appropriately inserted into the meat section Mp.

The present invention is not limited to the above-mentioned embodiment, and various modifications of the above-mentioned embodiment may be made without departing from the scope of the present invention.

For example, in the above-mentioned embodiment, the case in which the poultry leg meat M is hanging by the ankle holding part 2 has been described. However, this is not limited to the above, and the ankle holding part 2 needs to hold the ankle A of the poultry leg meat M. For example, the poultry leg meat M may be laid down on a work table (not shown). Then, it may be configured to hold the ankle A of the such placed poultry leg meat M. In this case, the ankle holding part 2 may be configured to move, for example, in the horizontal direction according to the posture of the poultry leg meat M. In addition, in this case, since the work table functions as the meat stopping part 4, the meat stopping part 4 can be removed.

In the above-mentioned embodiment, the case in which the hook 8 of the ankle holding part 2 is maintained in a closed state by a spring (not shown) has been described. However, this is not limited to the above, and the hook 8 may be configured so as to be openable and closable with respect to the hanger 7 and capable of maintaining the closed state. For example, the hook 8 may be provided so as to be openable and closable with respect to the hanger 7 using a toggle mechanism. Further, the poultry leg meat M may be hung using only the hanger 7 without the hook 8.

In the above-mentioned embodiment, the case in which the meat pressing part 3 includes the two pressing blocks 12a and 12b, and the coil spring 13 configured to elastically bias the two pressing blocks 12a and 12b in the direction in which they approach each other has been described. However, the meat pressing part 3 is not limited to this, and may have any configuration as long as it can press the meat section Mp near the ankle A from the slit side. For example, one of the two pressing blocks 12a and 12b may be used, or three or more pressing blocks may be used. In addition, a rubber member such as rubber or the like may be used instead of the coil spring 13. Any other member capable of elastically biasing the two pressing blocks 12a and 12b in the direction in which they approach each other may be used.

In the above-mentioned embodiment, the case in which the two pressing blocks 12a and 12b are provided on the base block 25 to be slidable in the forward/rearward direction has been described. However, this is not limited to this, and the two pressing blocks 12a and 12b may be arranged on the base block 25 to be movable toward and away from each other. For example, the base ends of the two pressing blocks 12a and 12b may be pivotably supported on the base block 25. With this configuration, the two pressing blocks 12a and 12b on the side of the pressing protrusion portion 18 move closer to and farther away from each other.

In the above-mentioned embodiment, the case in which the frame body 11 of the meat pressing part 3 and each of the pressing blocks 12a and 12b is slidable by, for example, the air cylinder has been described. However, this is not limited to the above, various actuators can be used to slide the frame body 11 or each of the pressing blocks 12a and 12b.

In the above-mentioned embodiment, the case in which the restricting part 20 configured to restrict the pressing amount on the poultry leg meat M of the pressing blocks 12a and 12b is provided has been described. The case in which the restricting bar 15 and the base block 25 function as the restricting part 20 has been described. However, this is not limited to the above and the restricting part 20 does not have to be provided. For example, the pressing amount on the poultry leg meat M of each of the pressing blocks 12a and 12b may be regulated by the actuator such as an air cylinder that slides each of the pressing blocks 12a and 12b.

In the above-mentioned embodiment, the case in which the meat insertion part 5 is inserted into the meat section Mp by moving the poultry leg meat M toward the meat insertion part 5 in the meat separating process has been described. However, this is not limited to the above, and the meat insertion part 5 may be inserted into the meat section Mp by moving the meat insertion part 5 toward the poultry leg meat M.

In the above-mentioned embodiment, the case in which the vicinity of the ankle A of the meat section Mp is cut by causing the round blade cutter 41 to approach the vicinity of the ankle A of the meat section Mp while horizontally moving the round blade cutter 41 of the meat cutting part 6 has been described. However, this is not limited to the above, the meat cutting part 6 may be fixed and the poultry leg meat M (the ankle holding part 2) may be moved horizontally to pass through the round blade cutter 41.

In the above-mentioned embodiment, the case in which the meat section Mp is cut by the meat cutting part 6 from outside has been described. However, this is not limited to the above, and the meat cutting part 6 may cut the vicinity of the ankle A of the meat section Mp into which the meat insertion part 5 is inserted. For example, a knife may be used as the meat cutting part 6. The knife may be inserted between the tibia S and the meat section Mp to cut the vicinity of the ankle A of the meat section Mp from inside the meat section Mp.

In the above-mentioned embodiment, the case in which the vicinity of the ankle A of the meat section Mp is cut in a state in which the meat insertion part 5 is inserted into the meat section Mp in the meat cutting process has been described. However, this is not limited to the above, and regardless of before or after each process, the vicinity of the ankle A of the meat section Mp may be cut by the meat cutting part 6. For example, after the meat insertion part 5 is pulled out from the meat section Mp, the vicinity of the ankle A of the meat section Mp may be cut by the meat cutting part 6. In addition, for example, after the vicinity of the ankle A of the meat section Mp is cut by the meat cutting part 6 in advance, the meat insertion part 5 may be inserted into the meat section Mp so as to be aligned with the tibia S.

### REFERENCE SIGNS LIST

1 Leg meat separation device
2 Ankle holding part
3 Meat pressing part
4 Meat stopping part
5 Meat insertion part
6 Meat cutting part
12a Front pressing block (pressing block)
12b Rear pressing block (pressing block)
13 Coil spring (biasing part)
15 Restricting bar (restricting part)
15a Reference surface
18 Pressing protrusion portion
18a Chamfered portion (pressing chamfered portion)
20 Restricting part
25 Base block (restricting part)
26 Upper pressing plate
26a Pressing end surface
27 Lower pressing plate
A Ankle
F Large leg bone
K Knee joint
M Poultry leg meat
Mp Meat section
P Patella
S Tibia
Ti Inner leg
To Outer leg

## Claims

1. A leg meat separation device configured to separate a meat section from a tibia in a bone-in poultry leg meat which is cut from a large leg bone of a poultry body, the leg meat separation device comprising:
an ankle holding part configured to hold an ankle of the poultry leg meat;
a meat pressing part configured to press the meat section near the ankle;
a meat insertion part that is inserted between the meat section pressed by the meat pressing part and the tibia and that is configured to separate the meat section from the tibia; and
a meat cutting part configured to cut near the ankle of the meat section.

2. The leg meat separation device according to claim 1, wherein a slit forming is performed in the poultry leg meat along a bone from the ankle until in front of a knee joint,
the meat pressing part presses the meat section on a side of a patella and on a side opposite to the patella while having the tibia sandwiched therebetween from a side in which the slit forming of the poultry leg meat was performed, and
the meat cutting part cuts the meat section from a side of an outer leg.

3. The leg meat separation device according to claim 1 or 2, comprising a meat stopping part that is provided on a side opposite to the meat pressing part with respect to the poultry leg meat and that is configured to stop the poultry leg meat from the side opposite to the meat pressing part.

4. The leg meat separation device according to claim 1 or 2, wherein the meat pressing part comprises:
two pressing blocks that are provided to approach or separate from each other and that have pressing end surfaces configured to press the meat section; and
a biasing part configured to elastically bias the two pressing blocks in a direction in which they approach each other, and
the meat pressing part presses the meat section such that the tibia is interposed between the two pressing blocks.

5. The leg meat separation device according to claim 4, wherein pressing protrusion portions are provided on each of the pressing end surfaces on sides of the two pressing blocks facing each other, and
pressing chamfered portions in which an interval between the two pressing protrusion portions is gradually increased toward tips are formed on each of the pressing protrusion portions on sides of the two pressing blocks facing each other.

6. The leg meat separation device according to claim 4, wherein the meat pressing part comprises a restricting part configured to restrict a pressing amount on the meat section by the pressing block.

7. A leg meat separation method of separating a meat section from a tibia in a bone-in poultry leg meat which is cut from a large leg bone of a poultry body, the leg meat separation method comprising:
a meat pressing process of pressing the meat section near an ankle of the poultry leg meat in a state in which the ankle is held;
a meat separating process of separating the meat section from the tibia by inserting a sharp tipped plate-shaped meat insertion part between the meat section pressed by the meat pressing process and the tibia; and
a meat cutting process configured to cut near the ankle of the meat section.

8. The leg meat separation method according to claim 7, wherein, in the meat cutting process, near the ankle of the meat section is cut in a state in which the meat section is separated from the tibia by the meat separating process.

9. The leg meat separation method according to claim 7 or 8, wherein a slit forming is performed in the poultry leg meat along a bone from the ankle until in front of a knee joint,
in the meat pressing process, a side of the patella and a side opposite to the patella while having the tibia in the meat section sandwiched therebetween are pressed from a side in which the slit forming of the poultry leg meat was performed; and
in the meat cutting process, the meat section is cut from a side of an outer leg.

10. The leg meat separation method according to claim 7 or 8, wherein, in the meat separating process, the meat insertion part is inserted from a side of the patella of the poultry leg meat.

11. The leg meat separation method according to claim 7 or 8, when the meat pressing process is performed, comprising a meat stopping process of stopping the poultry leg meat toward a side opposite to a pressing direction by the meat pressing process.
